# EUROPEAN PATENT SPECIFICATION

(11) **EP 2 708 166 B1**
(45) Date of publication and mention of the grant of the patent: **01.07.2015**
(21) Application number: 12782263.3
(22) Date of filing: 20.04.2012
(51) Int. Cl.: A47J 31/08, A47J 31/06

(54) **DISPOSABLE FILTERING CARTRIDGE FOR THE INFUSION OF AROMATIC HERBS, COFFEE, TEA AND THE LIKE**
EINWEG-FILTERPATRONE ZUR INFUSION VON AROMATISCHEN KRÄUTERN, KAFFEE, TEE ODER DERGLEICHEN
CARTOUCHE JETABLE FILTRANTE POUR L'INFUSION D'HERBES AROMATIQUES, DE CAFÉ, DE THÉ ET ANALOGUES

(30) Priority: 12.05.2011 CL 10742011
(43) Date of publication of application: 19.03.2014
(73) Proprietor: Llach Villalobos, Gonzalo Felipe, Las Condes, Santiago (CL)
(72) Inventor: Llach Villalobos, Gonzalo Felipe, Las Condes, Santiago (CL)
(74) Representative: Isern-Jara, Nuria
(86) International application number: PCT/CL2012/000018
(87) International publication number: WO 2012/151711

(56) References cited:
- EP-A1- 0 679 354
- WO-A1-91/10390
- GB-A- 2 419 805
- US-A- 634 349
- US-A- 4 981 588
- US-A- 5 605 710

## Description

### Background of the Invention

The present invention relates to a disposable cartridge for use as a filter, especially for the infusion of soluble elements, aromatic herbs such as tea, coffee or camomile, etc., forming a laminar template divided into three sections, which form said cartridge, provided with orifices and a kind of handle for securing inside a vessel or any desired element, thereby avoiding having to use other elements for securing, and it can be discarded when it has been used due to the material used.

With reference to the state of the art, for cartridges or cones, especially used for the infusion of soluble elements, U.S. patent 4.220.541 can be cited, which relates to a disposable filter for preparing coffee, tea or the like, for use and to be used without a bearing support, which consists of a piece of paper having the shape of an annular disc formed from a quadrant to be removed when in a flat position and having a funnel shape, and a circular filter paper concentrically placed inside the container through which the water can be poured through the filter in the central area, wherein a triangular gap is formed in the outer periphery of the piece of paper, an apex of the cavity is directed radially outwards, along which it was raised in the position of the container of the peripheral zone of the paper container. This can be folded along a peripheral line through the holes for the neck to form around the container.

Another invention is ES 2.195.481, which relates to a filter for infusion beverages, especially for a filter for coffee and a method for manufacturing this type of filter, wherein a fibrous material is used, having pores with a pore opening (d) of at least approximately 0.1mm measured with a fibre density representing approximately 50% of the original fibre density of the material, the average pore opening (d) lies preferably in the range of approximately 0.1mm to approximately 0.7mm, and more preferably in the range from approximately 0.1mm to approximately 0.4mm, the material is preferably paper, the pores are preferably further formed by punching with needles or a water jet a fibrous material, thereby forming a pore edge that is not defined.

Document US-A-5 605 710 discloses a disposable cartridge for use as a filter for the infusion of tea or coffee, which is provided with fastening means for fastening the cartridge to an annular ring of a vessel, the cartridge being formed by folding from a laminar template divided into several sections.

In view of the faults and disadvantages existing at present with cartridges that are used for preparing and filtering aromatic herbs, a cartridge has been created that is practical, with means for adequately attaching it safely and in a stable manner as well as properly containing the aromatic herbs inside the cartridge and extracting the soluble parts efficiently, which is not available in current cartridges, as these are constructed to occupy the entire annular diameter of the vessel or cup in order make them stable.

### Description of the Drawings

To understand more clearly the structure of the cartridge and its means for use as a filter, especially for extracting the infusion of soluble elements such as aromatic herbs, it will be described in accordance with the drawings that form an integral part of this disclosure, without this implying limitation to obvious modifications that may arise, wherein:
Figure 1 shows a plan view of the laminar template for forming the cartridge.
Figure 2 shows a side view of the cartridge for the infusion of aromatic herbs.
Figure 3 shows a front view of the cartridge for extracting the infusion of aromatic herbs.
Figure 4 shows a rear view of the cartridge for the infusion of aromatic herbs.
Figure 5 shows a top plan view of the assembly sequence and rear area of the cartridge of the invention.
Figure 6 shows a view of the cartridge in an assembly sequence, seen from the front.

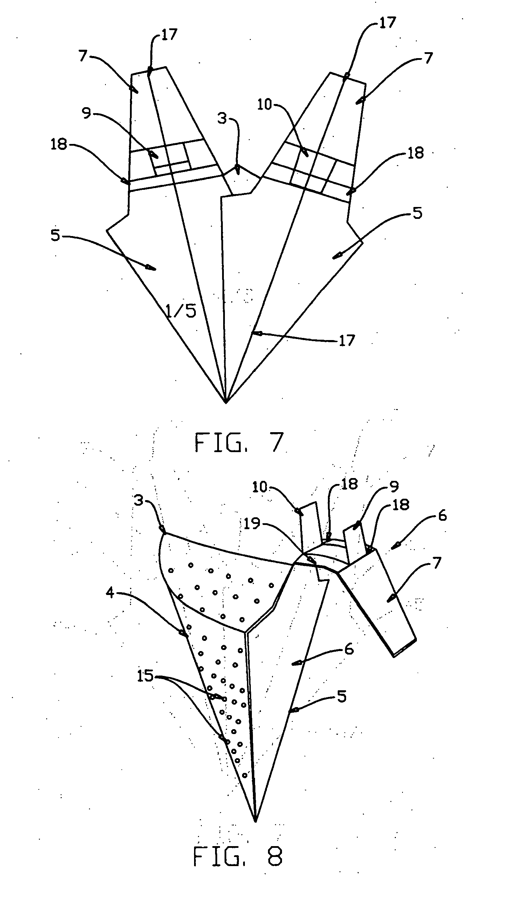

Figure 7 shows a rear view of the cartridge in an assembly sequence.
Figure 8 shows an isometric view of the cartridge of the invention.

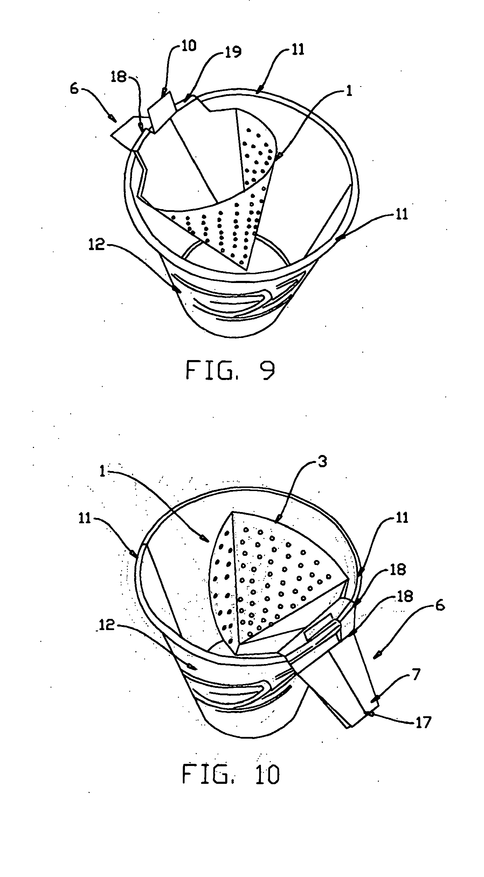

Figure 9 shows a top plan view of a drinking vessel and the cartridge seen from the front and fitted inside the vessel.
Figure 10 shows a top plan view of the cartridge of the invention, fitted inside a drinking vessel;

### Description of the Invention

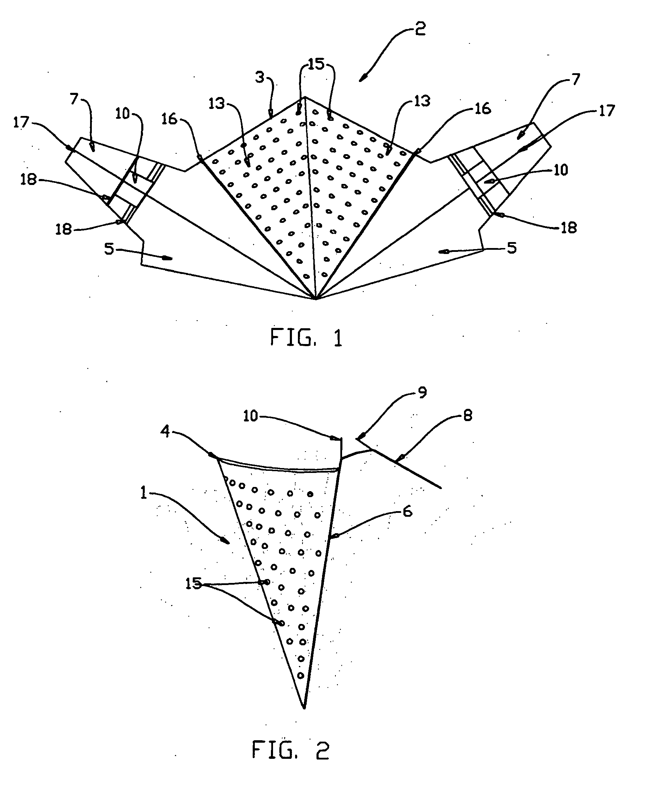

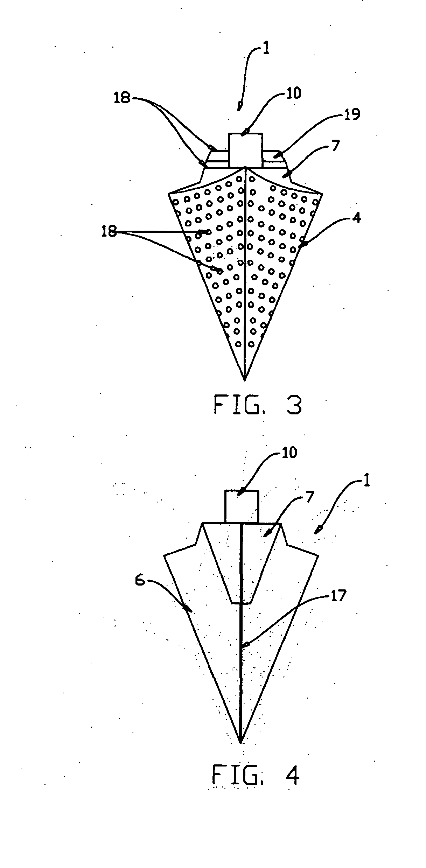

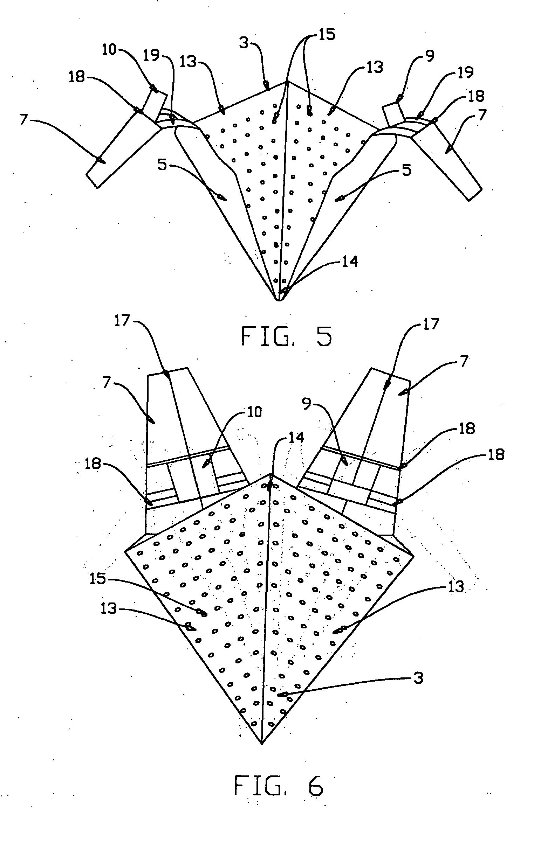

According to Figures 1 to 6, the cartridge for the infusion of aromatic herbs (1) is formed from a laminar template (2) divided into three sections of straight contour, namely a central section (3), which constitutes the container (4), and two, similar, lateral sections arranged obliquely (5), which, when overlapped, constitute a straight rear wall (6). Said lateral sections are arranged obliquely (5), and are provided with an extension or section (7), which, when overlapped, constitutes a handle (8), both being provided with a tab, namely a smaller tab (9) for securing and a larger tab (10), both being the means for fastening to an annular ring (11) of a vessel (12) or the like.

The central section (3) has two triangular sections (13) divided by a central demarcation (14), said central section (3) is further provided with equidistant orifices (15) for the essence or aromatic herb substance to exit into the vessel (12), similarly along the side edges of said central section (3) of the cartridge (1), the lateral oblique sections (5) join with the creases (16) of said cartridge template (1), which have a triangular sectional configuration, with a central linear demarcation (17) for guiding and followed by a lower area with an extension or section (7) having an inverted, truncated triangular configuration, which are provided with a number of transverse creases (18); in addition, both truncated triangular sections (7) have the smaller tab (9) and the larger tab (10), these emerging from the body of said truncated triangular sections (7), the smaller tab (9), the one which is folded and fastened onto the annular ring or edge (11) of the vessel (12), and the other larger tab (10) is positioned perpendicularly to said annular edge (11), such that the cartridge is supported inside said vessel (12).

To assemble the cartridge (1), firstly, the creases (16) must be folded upwards, with the oblique triangular side sections (5), which divide the central section (3) of the cartridge (1), together with the truncated triangular extensions (7), until the triangular sections (5) and truncated triangular sections (7), are completely overlapped. Once overlapped, the creases (18) must be folded downwards with the truncated triangular extensions (7), such that a flat top section (19) is formed thereby leaving the lower area of the truncated extension (7) parallel to the vessel wall (12) or the wall (6) of the triangular side sections (5). The tabs should then be folded: the smaller tab (9) is folded over the annular ring (11) of the vessel (12), and the larger tab (10) should be folded upwards such that they are perpendicular to the cone (1). In this manner, the cartridge (1) remains on the inside and attached to one side of said vessel (12).

## Claims

1. A disposable cartridge, for use as a filter, especially for the infusion of soluble elements, aromatic herbs such as tea, coffee or camomile, whose configuration comprises means for fastening it securely and in a stable manner without occupying the entire annular diameter of a vessel or cup, **CHARACTERISED in that** it is formed from a laminar template (2), divided into three sections of straight contour, namely a central section (3) that constitutes the container (4) and two, similar, lateral sections arranged obliquely (5), which, when overlapped, constitute a straight rear wall (6), said lateral sections arranged obliquely (5) and are provided with an extension or section (7), which, when overlapped, constitute a handle (8), both being provided with a tab, namely a smaller tab (9) for securing and a larger tab (10), both being the means for fastening to an annular ring (11) of a vessel (12) or the like.

2. A disposable cartridge according to claim 1, **CHARACTERISED in that** the central section (3) has triangular sections (13) divided by a central demarcation line (14), said central section (3) is further provided with equidistant orifices (15) for the essence or aromatic herb substance to exit into the vessel (12), similarly along the side edges of said central section (3) of the cartridge (1) the lateral oblique sections (5) join with the creases (16) of said cartridge template (1).

3. A disposable cartridge according to claim 1, **CHARACTERISED in that** the oblique sections (5) have a triangular sectional configuration with a central linear demarcation (17) for guiding and followed by an extension or section (7) having an inverted, truncated triangular configuration, which are provided with a number of transverse creases (18); in addition, both truncated triangular sections (7) have the smaller tab (9) and the larger tab (10), these emerging from the body of said truncated triangular sections (7), the smaller tab (9) being the one that is folded and fastened onto the annular ring or edge (11) of the vessel (12), and the other larger tab (10) being positioned perpendicularly to said annular edge (11) such that the cartridge is supported inside said vessel (12).

## Patentansprüche

1. Einwegkartusche zur Verwendung als Filter, insbesondere zum Aufguss von löslichen Elementen, aromatischen Kräutern wie Tee, Kaffee oder Kamille, dessen Ausführung Mittel umfasst, um sie sicher und stabil zu befestigen, ohne den gesamten ringförmigen Durchmesser eines Gefäßes oder einer Tasse zu belegen, **dadurch gekennzeichnet, dass** sie aus einer flächigen Vorlage (2) gebildet ist, welche in drei Abschnitte mit geradem Umriss aufgeteilt ist, nämlich in einen zentralen Abschnitt (3), welcher den Behälter (4) bildet, und zwei ähnliche seitliche, schräg angeordnete Abschnitte (5), welche eine gerade Rückwand (6) bilden, wenn sie sich überlappen, wobei die genannten seitlichen Abschnitte (5) schräg angeordnet sind und mit einer Erweiterung bzw. Abschnitt (7) versehen sind, welche einen Handgriff (8) bilden, wenn sie sich überlappen, wobei beide mit einer Lasche, nämlich einer kleineren Lasche (9) zur Sicherung und einer größeren Lasche (10), versehen sind, welche beide die Mittel zur Befestigung an einem kreisförmigen Ring (11) eines Gefäßes (12) oder Ähnlichem sind.

2. Einwegkartusche nach Anspruch 1, **dadurch gekennzeichnet, dass** der zentrale Abschnitt (3) dreieckige Abschnitte (13) aufweist, welche durch eine zentrale Begrenzungslinie (14) unterteilt sind, wobei der genannte zentrale Abschnitt (3) weiterhin mit abstandsgleichen Löchern (15) zum Austritt der Essenz bzw. der aromatischen Kräutersubstanz in das Gefäß (12) versehen ist, wobei die seitlichen schrägen Abschnitte (5) ähnlich entlang den Seitenkanten des genannten zentralen Abschnitts (3) der Kartusche (1) mit den Falten (16) der genannten Kartuschenvorlage (1) verbunden sind.

3. Einwegkartusche nach Anspruch 1, **dadurch gekennzeichnet, dass** die schrägen Abschnitte (5) eine dreieckige Abschnittsausbildung mit einer zentralen linearen Begrenzung (17) zur Führung aufweisen und auf diese eine Erweiterung bzw. Abschnitt (7) folgt, die eine umgekehrte, kegelstumpfförmige dreieckige Ausbildung haben, welche mit einer Anzahl an Querfalten (18) versehen sind; wobei zusätzlich beide kegelstumpfförmige dreieckige Abschnitte (7) die kleinere Lasche (9) und die größere Lasche (10) aufweisen, wobei diese vom Körper der genannten kegelstumpfförmigen dreieckigen Abschnitte (7) vorstehen, wobei die kleinere Lasche (9) diejenige ist, welche gefaltet und auf dem kreisförmigen Ring bzw. Kante (11) des Gefäßes (12) befestigt ist und die andere, größere Lasche (10) senkrecht zu der genannten kreisförmigen Kante (11) platziert ist, so dass die Kartusche innerhalb des genannten Gefäßes (12) abgestützt ist.

## Revendications

1. Cartouche jetable, pour une utilisation comme filtre, notamment pour l'infusion d'éléments solubles, d'herbes aromatiques tels que le thé, le café ou la camomille, dont la configuration comprend des moyens pour serrer fixement et de manière stable sans occuper tout le diamètre annulaire d'un récipient ou d'une tasse, **CARACTÉRISÉE en ce qu'**elle est formée à partir d'une base laminaire (2), divisée en trois sections à contour droit, à savoir une section centrale (3) qui constitue le conteneur (4) et deux sections latérales, similaires, disposées obliquement (5), qui, lorsqu'elles sont superposées constituent une paroi arrière droite (6), lesdites sections latérales disposées obliquement (5) et qui sont pourvues d'une extension ou d'une section (7), qui, lorsqu'elles sont superposées, constituent une poignée (8), toutes les deux étant pourvues d'une languette, à savoir une languette plus petite (9) pour la fixation et une languette plus grande (10), toutes les deux étant les moyens d'ancrage à un anneau annulaire (11) d'un récipient (12) ou semblable.

2. Cartouche jetable selon la revendication 1, **CARACTÉRISÉE en ce que** la section centrale (3) a des sections triangulaires (13) divisées par une ligne de démarcation centrale (14), ladite section centrale (3) est en outre pourvue d'orifices équidistants (15) pour la sortie de l'essence ou de la substance d'herbes aromatiques vers l'intérieur d'un récipient (12), similairement tout au long des bords latéraux de ladite section centrale (3) de la cartouche (1) les sections obliques latérales (5) sont reliées aux plis (16) de ladite base de cartouche (1).

3. Cartouche jetable selon la revendication 1, **CARACTÉRISÉE en ce que** les sections obliques (5) ont une configuration de section triangulaire ayant une démarcation linéaire centrale (17) pour le guidage et suivie par une extension ou section (7) ayant une configuration triangulaire tronquée inversée, qui sont pourvues d'un nombre d'angles transversaux (18) ; de plus, les deux sections triangulaires tronquées (7) ont la plus petite languette (9) et la plus grande languette (10), ces dernières émergeant du corps desdites sections triangulaires tronquées (7), la plus petite languette (9) étant celle qui est pliée et serrée à l'anneau ou bord annulaire (11) du récipient (12), et l'autre plus grande languette (10) étant positionnée perpendiculairement audit bord annulaire (11) de sorte que la cartouche soit maintenue à l'intérieur dudit récipient (12).
